# EUROPEAN PATENT APPLICATION

(11) **EP 2 902 654 A2**
(43) Date of publication of application: **05.08.2015**
(21) Application number: 14197695.1
(22) Date of filing: 12.12.2014
(51) Int. Cl.: F16D 65/092, F16D 69/04

(54) **Brake pad heat-dissipating structure**

(30) Priority: 24.01.2014 TW 103201516
(71) Applicant: Tribull Precise Ind. Co., Ltd., Changhua City, Changhua County 50067 (TW)
(72) Inventor: Tseng, Chien Jung, 50067 Changhua City, Changhua County (TW)
(74) Representative: Kuhnen & Wacker

(57) **Abstract**

A brake pad heat-dissipating structure includes a main body (1) having a heat-dissipating portion (12) and a connecting portion for installing a brake shoe (2), and the heat-dissipating portion (12) includes plural penetrating holes (13A) penetrating through the main body (1) and arranged side by side with each other, and each penetrating hole (13A) is connected to a fin (14A) extending towards the outside of the main body (1) to provide a heat dissipating effect.

## Description

### FIELD OF THE INVENTION

The present invention relates to a brake pad heat-dissipating structure, in particular to the brake pad heat-dissipating structure having a heat-dissipating portion and a main body integrally coupled to each other.

### BACKGROUND OF THE INVENTION

In a conventional heat-dissipating structure, a protruding fin is mounted onto a main body to increase the contact area with air, so as to achieve a good heat-dissipating effect. However, the manufacture of the conventional heat-dissipating structure requires a manufacturing process of connecting the plurality of fins onto the main body one by one, and thus incurring a more complicated manufacturing procedure and a higher cost.

### SUMMARY OF THE INVENTION

Therefore, **it** is a primary objective of the present invention to overcome the aforementioned problem of the prior art by providing a brake pad heat-dissipating structure having a heat-dissipating portion which is a part of the main body and integrally bent and extended from the main body to achieve the effects of easy manufacture and high heat dissipating efficiency.

To achieve the aforementioned objective, the present invention provides a brake pad heat-dissipating structure, comprising a main body having a heat-dissipating portion and a connecting portion for installing a brake shoe, wherein the heat-dissipating portion includes a plurality of penetrating holes penetrating through the main body and arranged side by side with each other, and each penetrating hole is coupled to a fin extending towards the outside of the main body, and the connecting portion includes a brake shoe, and the main body includes a positioning hole.

Wherein, each penetrating hole extends longitudinally on the main body. In another preferred embodiment, each penetrating hole extends transversely on the main body.

Further, each fin is formed in an arch shape protruding outwardly towards a side of the main body, and both ends of each fin are coupled to both ends of the corresponding penetrating hole respectively.

In addition, the connecting portion is a slot, and the bottom of the slot has an embossed line.

The present invention will become clearer in light of the following detailed description of an illustrative embodiment of this invention described in connection with the drawings. It is intended that the embodiments and drawings disclosed herein are to be considered illustrative rather than restrictive.

### BRIEF DESCRIPTION OF THE DRAWINGS

FIG. 1 is a perspective view of a first preferred embodiment of the present invention;
FIG. 2 is an exploded view of the first preferred embodiment of the present invention;
FIG. 3 is a cross-sectional view of the first preferred embodiment of the present invention; and
FIG. 4 is a schematic view of a second preferred embodiment of the present invention.

### DESCRIPTION OF THE PREFERRED EMBODIMENTS

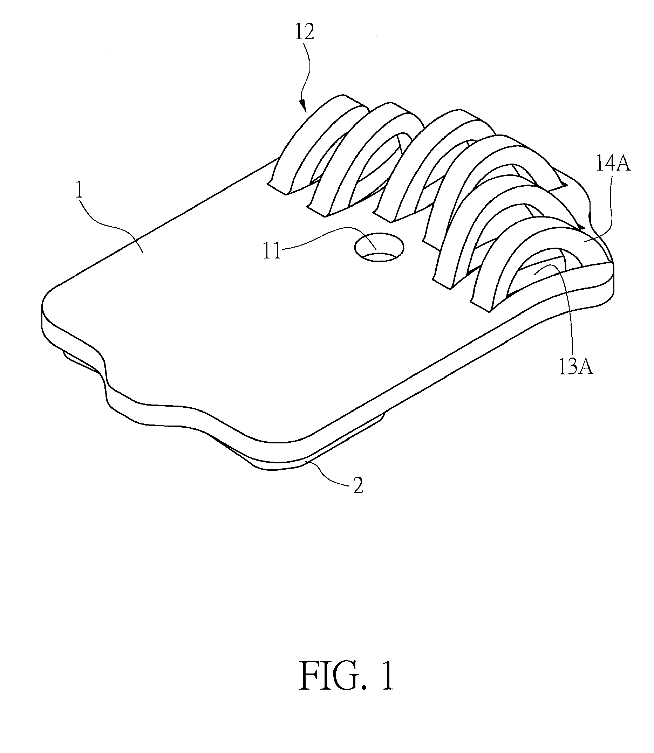

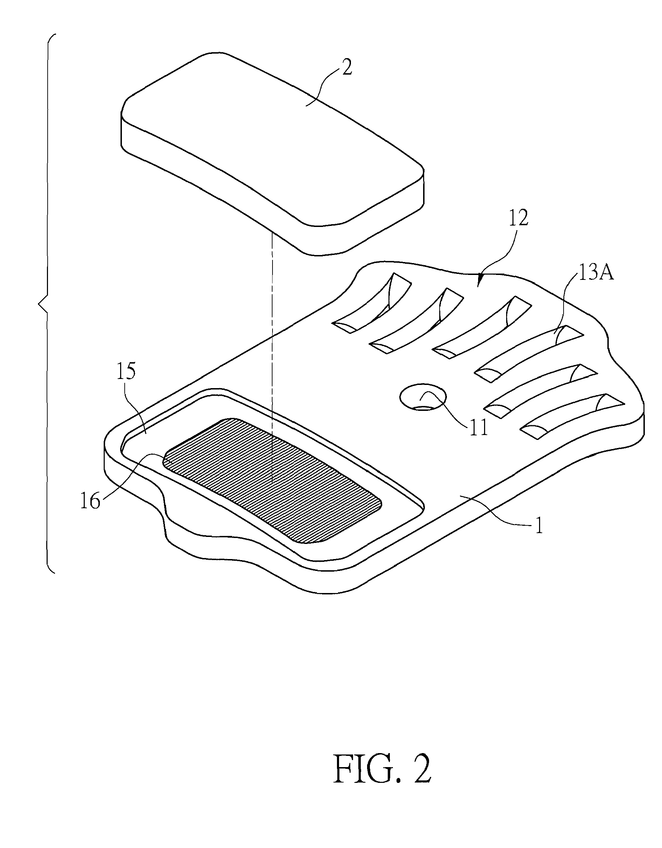

With reference to FIGS. 1 and 2 for a brake pad heat-dissipating structure in accordance with the first preferred embodiment of the present invention, the brake pad heat-dissipating structure comprises a main body 1 which is a plate having a positioning hole 11 for fixing a brake system of a motor vehicle. The main body 1 comprises a heat-dissipating portion 12 and a connecting portion for installing a brake shoe 2, wherein the heat-dissipating portion 12 is disposed at an end of the main body 1, and the connecting portion is disposed at the other end of the main body 1. The heat-dissipating portion 12 includes a plurality of penetrating holes 13A penetrating through the main body 1 and arranged side by side with each other, and each penetrating hole 13A is coupled to a fin 14A extending towards the outside of the main body 1, and the connecting portion includes a brake shoe 2.

In the heat-dissipating portion 12 of this preferred embodiment as shown in FIG. 1, each penetrating hole 13A extends longitudinally on the main body 1, and the fin 14A corresponsive to each penetrating hole 13A is formed into an arch shape and punched from the main body 1 by a stamping method and protruded outwardly towards a side of the main body 1, and both ends of the fin 14A are coupled to both ends of the penetrating hole 13A respectively. The connecting portion is a slot 15 as shown in FIG. 2, and the bottom of the slot 15 has an embossed line 16 for providing a friction when the brake shoe 2 is installed into the slot 15.

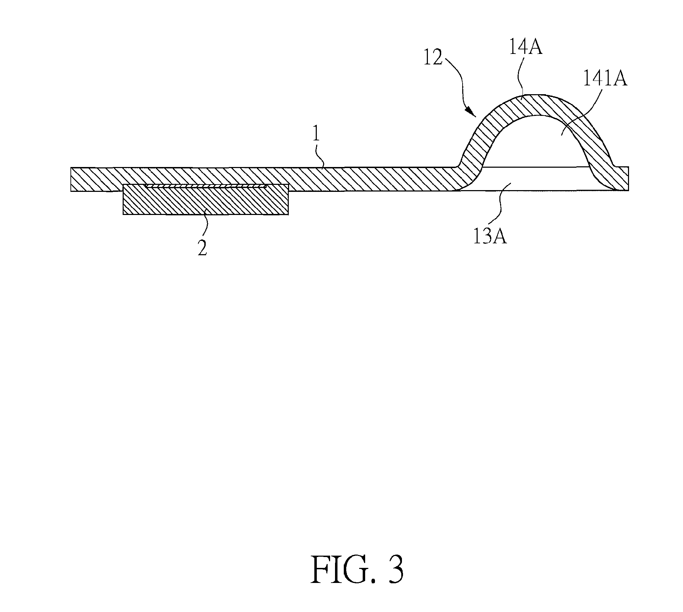

In this preferred embodiment, each fin 14A is punched directly from the main body 1 by a stamping method, so that the penetrating holes 13A are formed and penetrated through the main body 1, and outside air may pass through the penetrating holes 13A to assist heat dissipation. On the other hand, each punched fin 14A is in an arch shape as shown in FIG. 3, so that a channel 141A is formed between each fin 14A and the main body 1 and collocated with each penetrating hole 13A to achieve the effect of flowing air smoothly through each penetrating hole 13A and each channel 141A, so as to further improve the heat-dissipating effect.

In addition, the fins are formed by the stamping method, and thus a part of the main body is formed by stamping. Compared with the prior art that requires the installation of an additional material or component to the main body, the present invention achieves a lightweight effect. On the other hand, the penetrating holes and the arch fins formed by the stamping method provides a larger heat dissipating area than that of the conventional structure, so as to provide a higher heat dissipating effect. In addition, the arch shape is smooth, and thus the fins are not sharp protruding structures, which improve the safety of construction and/or maintenance for related workers.

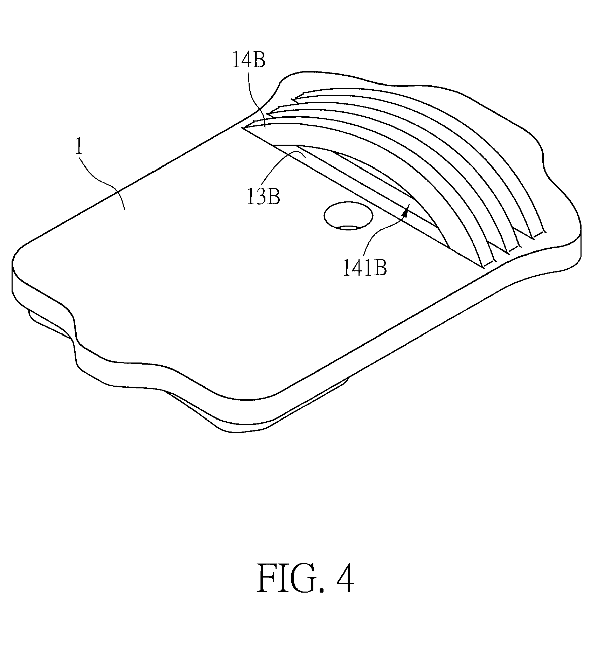

With reference to FIG. 4 for the second preferred embodiment of the present invention, the difference between the second preferred embodiment and the first preferred embodiment resides on that the fins 14B of the second preferred embodiment are formed by punching transversely from the main body 1, so that each penetrating hole 13B and each fin 14B are extended transversely from the main body 1. Same as the first preferred embodiment, this preferred embodiment also has the penetrating hole 13B and the channel 141B for passing external air to improve the heat dissipating effect.

While the invention has been described by means of specific embodiments, numerous modifications and variations could be made thereto by those skilled in the art without departing from the scope and spirit of the invention set forth in the claims.

## Claims

1. A brake pad heat-dissipating structure, comprising a main body (1) having a heat-dissipating portion (12) and a connecting portion for installing a brake shoe (2), wherein the heat-dissipating portion (12) includes a plurality of penetrating holes (13A) penetrating through the main body (1) and arranged side by side with each other, and each penetrating hole (13A) is coupled to a fin (14A) extending towards the outside of the main body (1), and the connecting portion includes a brake shoe (2), and the main body includes a positioning hole (11).

2. The brake pad heat-dissipating structure of claim 1, wherein each penetrating hole (13A) extends in a longitudinal direction on the main body (1).

3. The brake pad heat-dissipating structure of claim 1, wherein each penetrating hole (13A) extends in a transverse direction on the main body (1).

4. The brake pad heat-dissipating structure of claim 1, 2 or 3, wherein each fin (14A) is formed in an arch shape protruding outwardly towards a side of the main body (1), and both ends of each fin (14a) are coupled to both ends of the corresponding penetrating hole (13A) respectively.

5. The brake pad heat-dissipating structure of claim 1, wherein the connecting portion is a slot (15), and the bottom of the slot (15) has an embossed line (16).
